# FASCICULE DE BREVET EUROPEEN

(11) **EP 3 405 723 B1**
(45) Date de publication et mention de la délivrance du brevet: **23.03.2022**
(21) Numéro de dépôt: 17700814.1
(22) Date de dépôt: 16.01.2017
(51) Int. Cl.: F24H 1/40, F24H 8/00, F28F 9/02, F28D 7/00, F28D 7/08, F28D 9/00, F24H 1/43

(54) **ECHANGEUR DE CHALEUR À CONDENSATION MUNI D'UN DISPOSITIF D'ÉCHANGES THERMIQUES**
KONDENSATIONSWÄRMETAUSCHER MIT EINER WÄRMETAUSCHERVORRICHTUNG
CONDENSATION HEAT EXCHANGER PROVIDED WITH A HEAT EXCHANGE DEVICE

(30) Priorité: 22.01.2016 FR 1650529
(43) Date de publication de la demande: 28.11.2018
(73) Titulaire: SERMETA, 29600 Morlaix (FR)
(72) Inventeur: LE MER, Joseph, 29252 Plouezoch (FR)
(74) Mandataire: Regimbeau
(86) Numéro de dépôt international: PCT/EP2017/050833
(87) Numéro de publication internationale: WO 2017/125361

(56) Documents cités:
- EP-A1- 1 813 882
- EP-A2- 1 251 319
- EP-A2- 2 157 382
- WO-A1-94/16272
- WO-A1-2004/036121
- DE-A1- 4 309 598
- US-A1- 2003 192 684
- US-A1- 2005 120 981
- US-B1- 6 810 836

## Description

### DOMAINE TECHNIQUE GENERAL

La présente invention concerne un échangeur de chaleur à condensation, équipé d'un dispositif d'échanges thermiques.

Un tel échangeur est notamment destiné à équiper une chaudière à gaz ou à fioul pour des applications industrielles ou tertiaires, en vue d'alimenter par exemple un circuit de chauffage central ou un circuit d'eau à usage sanitaire.

### ETAT DE L'ART

On connaît déjà dans l'état de la technique de nombreux échangeurs permettant de transférer l'énergie d'un combustible vers un fluide à réchauffer.

Les échangeurs thermiques munis de tubes en acier inoxydable fonctionnant selon deux principes se partagent l'essentiel du marché du chauffage et de la production d'eau chaude sanitaire. Il s'agit des échangeurs à tubes de fumée et des échangeurs à tubes d'eau, dénommés ainsi en fonction du fluide qui circule à l'intérieur desdits tubes.

Les échangeurs dits "à tubes de fumée" ont en général une forte capacité en eau. Ils sont donc encombrants et très lourds. En outre, leur conception leur confère une forte inertie face aux besoins de variations rapides de température et de puissance qui sont requis pour les applications envisagées.

Les échangeurs dits "à tubes d'eau" ont en général une faible capacité en eau. Ils sont moins encombrants, moins lourds et permettent également une variation de température et de puissance plus rapide. Enfin, leur coût de fabrication pour obtenir une même puissance nominale est généralement plus faible que celui des échangeurs à tubes de fumée.

Toutefois, il reste souhaitable d'améliorer encore les échangeurs de chaleur à condensation et à tubes d'eau, existants sur le marché.

On connait déjà d'après le document US 6 644 393, un échangeur de chaleur comprenant un dispositif d'échanges thermiques et un brûleur à gaz.

Le dispositif d'échanges thermiques comprend un collecteur et deux faisceaux de tubes radialement concentriques, chaque faisceau de tubes comprenant une série de tubes en arc de cercle, disposés dans des plans parallèles avec un interstice entre eux. Les deux extrémités de chaque tube en arc de cercle débouchent à l'intérieur du collecteur. Le brûleur à gaz est disposé au centre du faisceau intérieur et les gaz chauds produits permettent de réchauffer les tubes et de ce fait, l'eau qui circule à l'intérieur de ceux-ci.

En outre, le collecteur est muni d'un couvercle amovible et intérieurement d'une barrière également amovible, ce qui permet après retrait du couvercle et de la barrière, d'accéder facilement aux extrémités des tubes qui débouchent dans ledit collecteur et de résoudre ainsi le problème technique du nettoyage aisé desdits tubes.

Comme on peut le voir sur la figure 6 de ce document, la barrière est configurée de sorte que le flux d'eau entrant (flèche IN) alimente simultanément la moitié des tubes du faisceau intérieur et la moitié des tubes du faisceau extérieur. A la sortie de ces tubes, les deux flux sont mélangés puis dirigés vers l'autre moitié des faisceaux pour alimenter de nouveau simultanément les tubes du faisceau intérieur et ceux du faisceau extérieur.

Un tel dispositif présente toutefois un inconvénient majeur.

L'eau (flèche IN) rentre à la même température dans les deux faisceaux intérieur et extérieur, puis l'eau qui circule dans les tubes du faisceau intérieur est chauffée à une température plus élevée que celle circulant dans les tubes du faisceau extérieur (première passe). Les deux flux sont mélangés, leur température est moyennée puis ce flux pénètre simultanément dans la deuxième moitié du faisceau intérieur et du faisceau extérieur (deuxième passe).

A la sortie du collecteur, les deux flux sont mélangés (flèche OUT) et la température du flux sortant correspond à la moyenne des deux flux d'eau issus respectivement du faisceau intérieur et du faisceau extérieur.

En conséquence, si l'on souhaitait par exemple produire de l'eau à 50°C à partir d'une eau à 30°C avec un tel dispositif, il faudrait que l'eau sortant après la deuxième passe des tubes du faisceau intérieur soit environ à 55°C et celle sortant des tubes du faisceau extérieur à environ 45°C pour obtenir une moyenne de 50°C après mélange des deux flux. L'eau circulant dans le faisceau intérieur serait donc chauffée plus que nécessaire. De plus, les gaz chauds produits par le brûleur central et qui sont à environ 1000°C se refroidiraient moins au contact des tubes du faisceau intérieur dans lequel circule une eau à 55°C. Ils sortiraient du dispositif à une température relativement élevée que l'on peut estimer de l'ordre de 80°C. Ces gaz refroidis seraient alors à une température supérieure au point de rosée (égal à 55°C) et ne condenseraient pas. Un tel échangeur de chaleur offrirait donc un mauvais rendement énergétique, les émissions de polluants (NOx, CO et CO₂) seraient plus élevées.

De même, si l'on souhaitait par exemple produire de l'eau à 95°C à partir d'une eau à 80°C avec un tel dispositif, il faudrait que l'eau sortant des tubes du faisceau intérieur soit environ à 105°C et celle sortant des tubes du faisceau extérieur à environ 85°C pour obtenir une moyenne de 95°C après mélange des deux flux. Dans ce cas, on observerait un phénomène d'ébullition dans au moins une partie des tubes du faisceau intérieur, ce qui est rédhibitoire pour des applications chauffages car engendre une sollicitation thermique de l'intrado des tubes au-delà des conditions normales de fonctionnement, provoquant à minima des bruits, claquements et détérioration des tubes jusqu'à rupture.

Enfin, ce dispositif présente également d'autres inconvénients. Si l'étanchéité n'est pas parfaite lorsque le couvercle et la barrière amovible sont mis en place, il apparaît des phénomènes parasites de turbulences, de pertes de charge et de mélange des différents flux d'eau à l'intérieur du dispositif, ce qui entraîne des phénomènes de disparité des débits d'eau dans les tubes et donc l'apparition de phénomènes d'ébullition dans ces tubes.

### PRESENTATION DE L'INVENTION

L'invention a pour objectif de proposer un échangeur de chaleur à condensation qui :
- permette d'obtenir des rendements thermiques à condensation atteignant le maximum au regard des lois physiques.
- permet de limiter fortement les pertes de charge à l'intérieur du circuit d'eau,
- soit d'une conception extrêmement modulaire, de façon à permettre d'obtenir des gammes de puissance allant de quelques dizaines à plusieurs milliers de kilowatts, tout en utilisant un seul brûleur dont la puissance est adaptée en conséquence,
- présente un rapport puissance/encombrement/poids réduit et donc un coût plus faible que les échangeurs de chaleur fonctionnant selon d'autres concepts,
- permette l'assemblage des tubes par d'autres moyens que le brasage, apportant ainsi une plus grande longévité à l'échangeur.

A cet effet, l'invention concerne un échangeur de chaleur à condensation, selon la revendication 1.

Grâce aux caractéristiques de l'invention, on peut ainsi obtenir un fort réchauffement du fluide caloporteur avec un fort refroidissement des gaz et donc un rendement énergétique maximal, le tout avec un dispositif particulièrement compact. En outre, le fait de faire circuler le fluide en parallèle dans tous les tubes d'un même groupe de tubes permet de limiter les pertes de charge.

Enfin, le fait que le collecteur soit en matériau thermiquement bon conducteur augmente encore les échanges thermiques.

Selon d'autres caractéristiques avantageuses et non limitatives de l'invention, prises seules ou en combinaison :
- le collecteur comprend un fond, une paroi extérieure, une paroi arrière, une paroi avant et deux parois latérales au travers desquelles les premières et les deuxièmes extrémités des tubes des différents faisceaux débouchent à l'intérieur du collecteur et ces parois latérales s'étendent dans des plans radiaux d'un cylindre dont l'axe longitudinal passe par le centre des cercles des différents tubes en arc de cercle,
- les tubes desdits faisceaux présentent une section droite ovale aplatie de sorte qu'ils comprennent deux faces planes latérales parallèles entre elles et perpendiculaires à l'axe longitudinal joignant les centres des cercles des tubes en arc de cercle,

- les cloisons qui constituent les différents canaux s'étendent dans le collecteur longitudinalement, transversalement et/ou en diagonale,
- les cloisons qui constituent les différents canaux s'étendent sur une partie ou sur la totalité de la hauteur, de la largeur ou de la longueur du collecteur,
- les cloisons qui constituent les différents canaux sont incurvées,
- les interstices entre deux tubes adjacents des différents faisceaux sont calibrés au moyen d'entretoises,
- de préférence lesdites entretoises sont des bossages ou corrugations, formées dans la paroi d'un tube, en regard de la paroi d'un tube adjacent du même faisceau.
- l'échangeur comprend des moyens pour faire circuler ledit fluide caloporteur dans les tubes,
- les moyens de production de gaz chauds sont un brûleur à gaz ou à fioul.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, plusieurs modes de réalisation possibles.

Sur ces dessins :
- la figure 1 est une vue en coupe longitudinale d'un échangeur de chaleur à condensation conforme à un premier mode de réalisation de l'invention, prise selon la ligne de coupe I-I de la figure 12,
- les figures 2 et 3 sont des vues en perspective d'un dispositif d'échanges thermiques conforme à l'invention, prises selon deux angles de vue opposés, l'extrémité arrière du collecteur ayant été tronquée sur la figure 3,
- la figure 4 est une vue en coupe transversale du dispositif d'échanges thermiques de la figure 2 prise selon un plan de coupe matérialisé par la ligne IV-IV en figure 2,
- la figure 5 est une vue en coupe longitudinale du dispositif d'échanges thermiques de la figure 2 prise, selon le plan de coupe P5 ,
- la figure 6 est une vue en coupe transversale du dispositif d'échanges thermiques de la figure 2 prise selon un plan de coupe matérialisé par la ligne VI-VI ,
- la figure 7 est une vue de dessus du dispositif d'échanges thermiques de la figure 2,
- la figure 8 est une vue en perspective d'un autre mode de réalisation d'un dispositif d'échanges thermiques conforme à l'invention,
- les figures 9, 10 et 11 sont des vues en coupe longitudinale de différents autres modes de réalisation d'échangeurs de chaleur à condensation, celui de la figure 9 n'étant pas conforme à l'invention et ceux des figures 10 et 11 étant conformes à l'invention,
- les figures 12, 13 et 14 sont des vues en perspective de trois échangeurs de chaleur à condensation représentés sans le brûleur, qui différent quant à la position des raccords d'entrée et de sortie,
- la figure 15 est une vue schématique en coupe transversale d'un échangeur de chaleur conforme à l'invention dont le dispositif d'échanges thermiques comprend deux faisceaux de tubes, et
- La figure 16 est une vue similaire à celle de la figure 15 mais pour un dispositif d'échanges thermiques à trois faisceaux de tubes.

### DESCRIPTION DETAILLEE

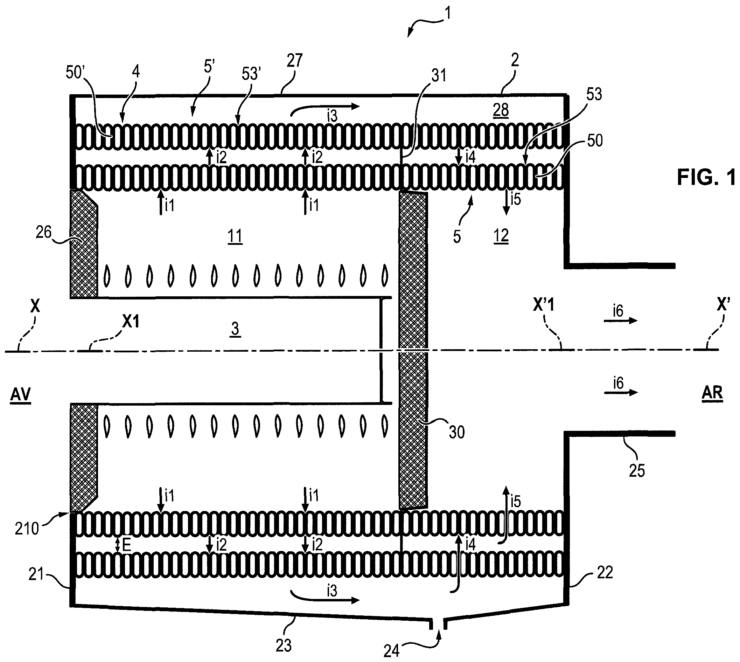

En se reportant à la figure 1 jointe, on peut voir un échangeur de chaleur à condensation 1. Il comprend une enveloppe 2 étanche aux gaz, qui délimite une enceinte à l'intérieur de laquelle sont montés des moyens 3 de production de gaz chauds ou d'amenée de gaz chauds et un dispositif d'échanges thermiques 4 conforme à l'invention.

L'enveloppe 2 présente approximativement une forme générale cylindrique d'axe longitudinal X-X'.

Cette enveloppe 2 est obturée à ses deux extrémités par des couvercles ou façades. On désigne par "façade avant", la façade 21 orientée vers l'avant AV qui se trouve à gauche sur la figure 1 et par "façade arrière", la façade opposée 22 qui se trouve à l'arrière AR de l'échangeur 1.

L'enveloppe 2 présente un fond 23, doté d'une bouche 24 d'évacuation des condensats.

L'enveloppe 2 comprend également une manchette 25 d'évacuation des gaz chauds.

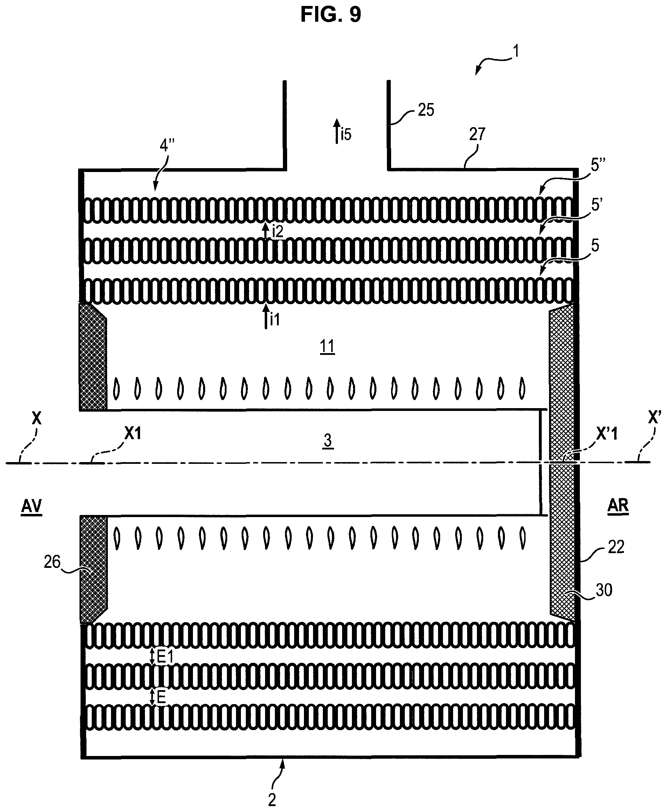

Dans l'exemple de réalisation représenté sur la figure 1, cette manchette 25 est raccordée sur la façade arrière 22. Toutefois, cette disposition n'est pas obligatoire et dans le mode de réalisation de la figure 9, on peut voir que la manchette 25 peut être raccordée à la paroi supérieure 27 de l'enveloppe 2.

La façade avant 21 présente une ouverture 210 apte à recevoir une porte 26isolée thermiquement et qui supporte un brûleur 3. Le brûleur 3 est par exemple un brûleur à gaz ou à fioul. Il s'agit de préférence d'un brûleur cylindrique qui s'étend selon l'axe longitudinal X-X'. Ce brûleur constitue un moyen de production directe de gaz chauds.

Bien que cela ne soit pas représenté sur les figures, il pourrait toutefois être remplacé par des moyens d'amenée de gaz chauds. Ces moyens permettent d'introduire des gaz chauds au travers de la porte 26, à l'intérieur de l'enceinte délimitée par l'enveloppe 2, ces gaz chauds étant produits à l'extérieur de l'enveloppe 2.

Le dispositif d'échanges thermiques 4 qui sera décrit plus en détail ultérieurement présente également une forme générale cylindrique d'axe longitudinal X1-X'1. Il est monté à l'intérieur de l'enveloppe 2 de façon que son axe X1-X'1 soit coaxial à l'axe longitudinal X-X' de l'enveloppe 2.

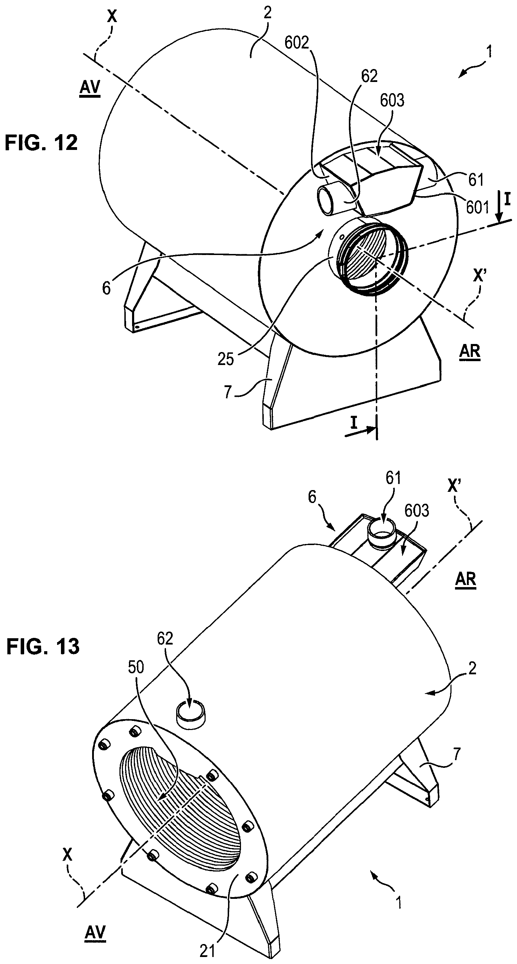

Enfin, comme on peut le voir sur les figures 12 à 14, l'enveloppe 2 repose avantageusement sur un support 7.

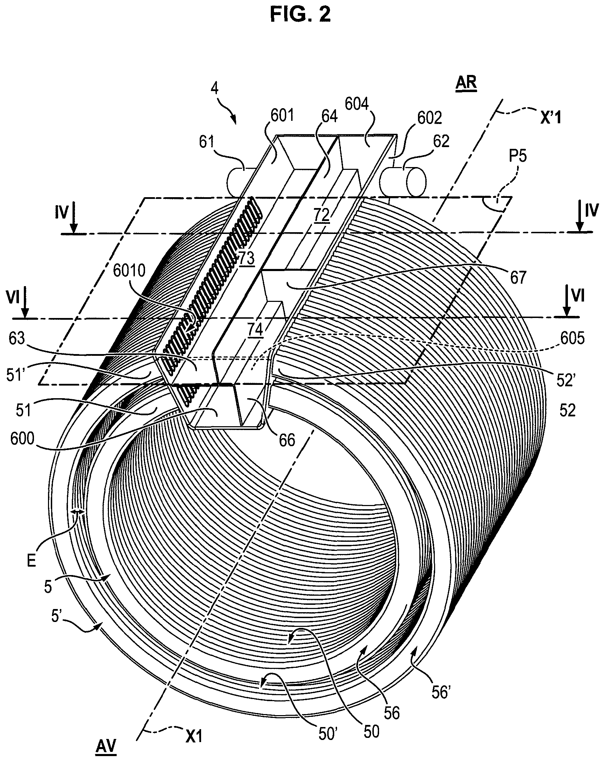

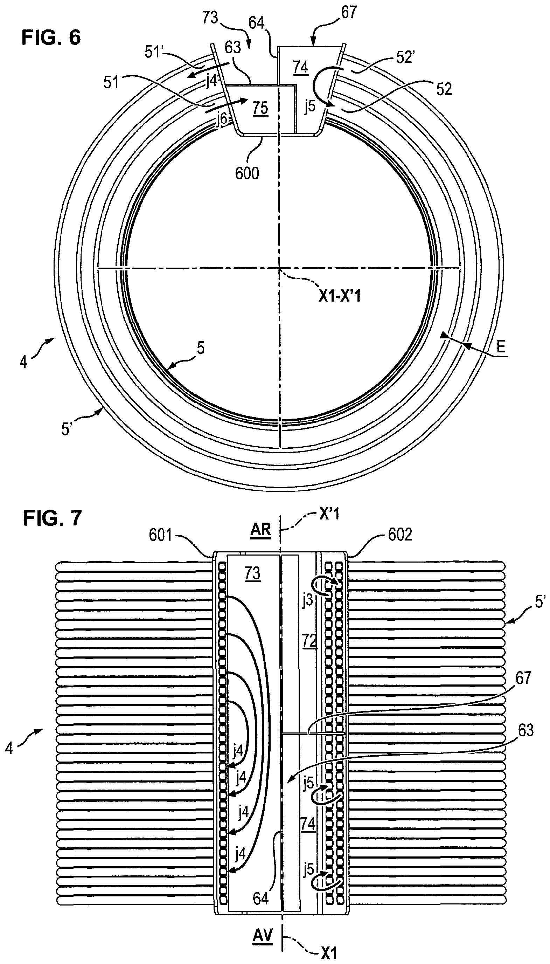

Un premier mode de réalisation d'un dispositif d'échanges thermiques 4 va maintenant être décrit en relation avec les figures 2 à 7.

Dans ce mode de réalisation, le dispositif d'échanges thermiques 4 comprend deux faisceaux de tubes 5, 5', assemblés entre eux à l'aide d'un unique collecteur 6 dit « mono-collecteur ».

Chaque faisceau de tubes 5, 5' comprend une série de tubes 50, respectivement 50', en matériau thermiquement bon conducteur, de préférence en métal, par exemple en acier inoxydable ou en aluminium.

Un fluide caloporteur, par exemple de l'eau, est destiné à circuler à l'intérieur des tubes 50, 50'.

Chaque tube 50, 50' présente une forme en arc de cercle dont le centre du cercle est situé sur l'axe longitudinal X1-X'1. Ces tubes sont obtenus par exemple par cintrage.

Chaque tube 50 présente une première extrémité 51 et une deuxième extrémité opposée 52. De même, chaque tube 50' présente une première extrémité 51' et une deuxième extrémité 52'.

Les deux faisceaux de tubes 5 et 5' sont disposés de façon concentrique autour de l'axe longitudinal X1-X'1, le faisceau 5, dit "premier faisceau", étant disposé à l'intérieur du faisceau 5', dit "deuxième faisceau". En d'autres termes, le premier faisceau 5 situé à l'intérieur présente un diamètre extérieur inférieur au diamètre intérieur du deuxième faisceau 5'.

Les deux faisceaux 5 et 5' sont ainsi espacés l'un de l'autre d'un intervalle E.

Cette disposition concentrique permet de conserver un espace central à l'intérieur duquel est logé le brûleur 3.

Dans chaque faisceau 5, 5', les tubes en arc de cercle 50, respectivement 50', sont disposés dans des plans parallèles, ces différents plans étant eux-mêmes perpendiculaires à l'axe X1-X'1 et deux tubes adjacents 50, (respectivement 50') sont espacés entre eux d'un interstice référencé 53, (respectivement 53'). Ces interstices apparaissent mieux sur la figure 1, par exemple.

De tels interstices 53, 53' sont avantageusement de largeur constante.

Selon une première variante, les faisceaux de tubes 5, 5' sont disposés concentriquement l'un à l'intérieur de l'autre de façon que leurs interstices respectifs 53, 53' soient alignés dans un même plan, comme on peut le voir sur les figures 1 et 9 à 11.

Selon une autre variante non représentée sur les figures, il est également possible de disposer les faisceaux de tubes concentriques 5, 5', en décalant l'un d'un demi-pas par rapport à l'autre, de sorte que les tubes 50 du faisceau 5 soient en regard des interstices 53' ménagés entre les tubes 50' du faisceau 5'.

De façon avantageuse, chaque tube 50, 50' présente une section droite ovale aplatie au centre, de sorte qu'il présente deux faces planes latérales parallèles entre elles et qui s'étendent dans des plans perpendiculaires à l'axe longitudinal X1-X'1 de ces tubes en arc de cercle.

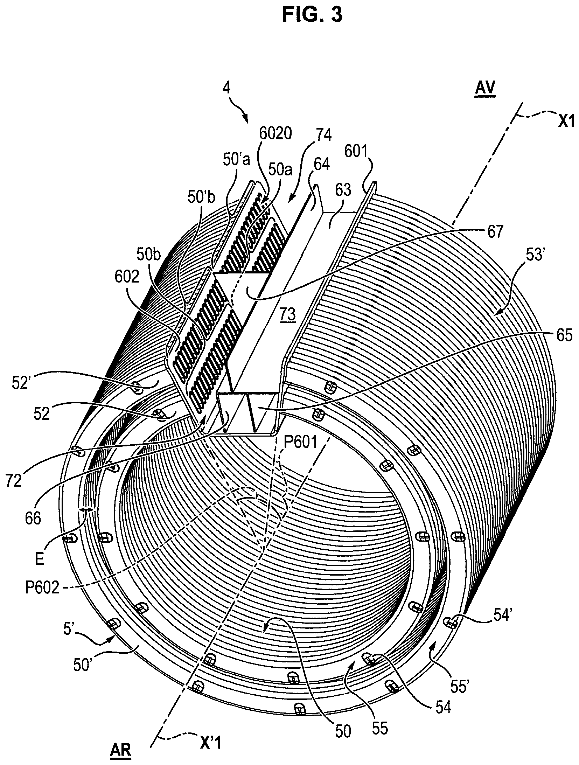

Lesdites faces planes latérales des tubes 50, 50' orientées vers l'arrière AR portent respectivement les références 55, 55'. Elles sont visibles sur la figure 3. Les faces planes latérales opposées des tubes 50, 50' tournées vers l'avant AV portent respectivement les références 56, 56'. Elles sont visibles sur la figure 2.

Les interstices 53, 53' sont définis à l'aide d'entretoises constituées, par exemple par des bossages 54, 54' ou des corrugations formés sur une seule de ces faces planes latérales, par exemple la face arrière 55, respectivement 55' des tubes 50, 50', voire sur les deux faces 55, 56, 55', 56'.

De façon avantageuse également, ces bossages 54, 54' s'étendent radialement, c'est-à-dire selon un rayon du cercle de chacun des tubes 50, 50' en arc de cercle.

De préférence, les bossages 54, 54' sont répartis uniformément sur la totalité de la circonférence de l'arc de cercle. Ils sont par exemple formés par hydroformage.

Enfin, au sein de chaque faisceau de tubes 5, 5', on désigne par "groupe de tubes", un groupe d'au moins deux tubes adjacents à l'intérieur desquels le fluide caloporteur circule en parallèle et dans le même sens. Dans le mode de réalisation représenté sur les figures 2 et 3, le premier faisceau de tubes 5 présente deux groupes de tubes 50a, 50b, tandis que le deuxième faisceau 5' présente deux groupes de tubes référencés 50'a et 50'b.

Comme cela apparaît mieux sur les figures 2, 12 et 13, l'unique collecteur 6 (ou monocollecteur) est un élément ayant de préférence sensiblement la forme d'un parallélépipède, qui comprend un fond 600 orienté vers l'axe X1-X'1, de préférence plan, deux parois latérales 601, 602, une paroi extérieure 603 et deux parois d'extrémité, respectivement une paroi arrière 604 et une paroi avant 605, dénommées ainsi en raison de leur orientation par rapport à l'avant et l'arrière de l'enveloppe 2 lorsque le dispositif 4 est dans cette enveloppe.

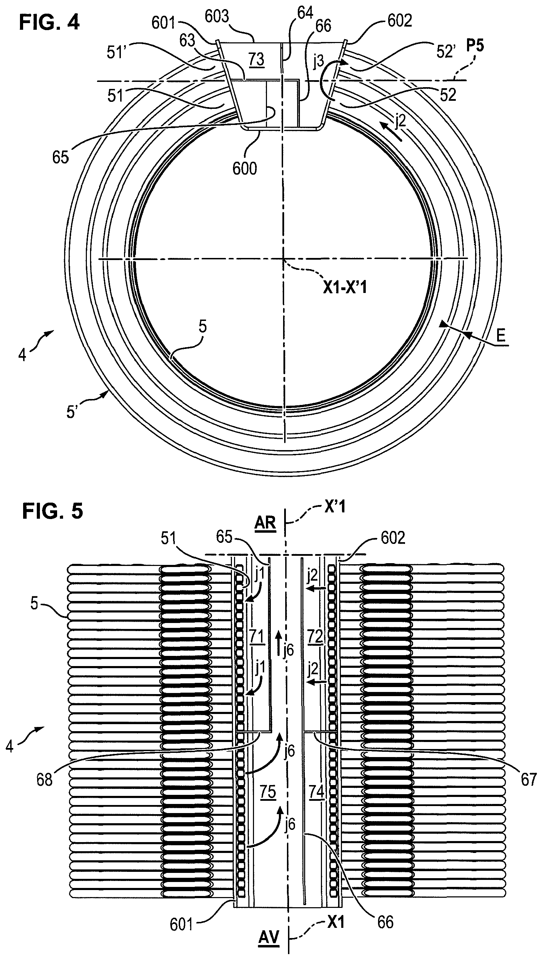

La paroi extérieure 603 n'est pas représentée sur la figure 2, afin de pouvoir observer l'intérieur du collecteur 6 mais est visible sur les figures 4, 15 et 16 et par ailleurs, la paroi avant 605 n'apparaît qu'en pointillés.

De façon avantageuse, le collecteur 6 est réalisé également dans un matériau thermiquement bon conducteur, de préférence en métal, par exemple en acier inoxydable ou en aluminium. Le collecteur 6 étant logé dans l'enveloppe 2, ceci favorise les échanges thermiques avec les gaz chauds.

De façon avantageuse, les deux parois latérales 601 et 602 sont évasées depuis le fond 60 de sorte qu'elles s'étendent, dans des plans radiaux P601, P602 d'un cylindre d'axe longitudinal X1-X'1. Les parois arrière 604 et avant 605 sont alors sensiblement en forme de trapèze isocèle, de façon à s'adapter à la section du collecteur 6.

Les parois latérales 601, 602 sont percées d'une pluralité d'orifices 6010, respectivement 6020, auxquels sont raccordées les premières extrémités 51, 51' des tubes 50, 50' et respectivement les deuxièmes extrémités 52, 52' des tubes 50, 50'. Ainsi les tubes 50, 50' débouchent dans le collecteur 6 et sont en communication de fluide avec celui-ci.

La fixation des tubes sur les parois 601, 602 du collecteur s'effectue de préférence par soudure, ou sertissage ou dudgeonnage selon l'épaisseur des parois.

Le fait d'avoir des parois latérales 601, 602 qui s'étendent dans des plans radiaux d'un cylindre d'axe X1-X'1 permet d'utiliser des tubes 50, 50' dont les sections des extrémités 51, 52, 51', 52' sont des sections droites (c'est à dire perpendiculaire à la directrice du tube). Ceci simplifie l'étape de d'assemblage des tubes sur les parois 601, 602.

Toutefois, les parois latérales 601 et 602 pourraient également avoir une orientation différente, par exemple être perpendiculaires au fond 600. Le plan de coupe des extrémités 51, 52, 51', 52' seraient alors adapté en conséquence.

Le collecteur 6 est muni d'un raccord d'entrée 61 qui permet son alimentation en fluide caloporteur (eau) à réchauffer et d'un raccord de sortie 62 qui permet l'évacuation dudit fluide une fois réchauffé.

Dans l'exemple de réalisation représenté sur les figures 2 et 12, les raccords d'entrée 61 et de sortie 62 sont disposés à l'extrémité arrière du collecteur 6, le raccord 61 débouchant dans le collecteur au travers de la paroi 601 et le raccord 62 au travers de la paroi 602.

Toutefois, d'autres dispositions sont possibles. Ainsi, les raccords d'entrée 61 et de sortie 62 peuvent être disposés à l'extrémité arrière ou avant des parois latérales 601 ou 602, sur la face avant 605 ou la face arrière 604 ou sur la face extérieure 603.

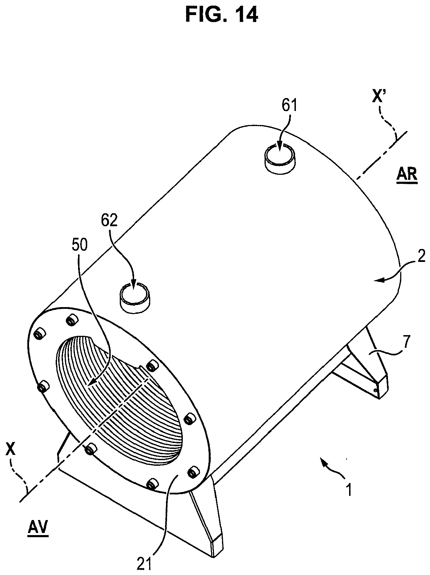

Par ailleurs, la partie du collecteur 6 dans laquelle débouche au moins l'un des raccords 61 et 62 peut faire saillie hors de l'enveloppe 2 (voir figures 12 et 13) ou non (voir figure 14).

Une pluralité de cloisons est en outre disposée à l'intérieur du collecteur 6, de façon à définir à l'intérieur de celui-ci une pluralité de canaux.

Ces cloisons jouent le rôle de déflecteurs, en ce sens qu'elles ont pour rôle de guider les flux de fluide caloporteur tout en réduisant les pertes de charge.

Ces cloisons sont de préférence réalisées dans le même matériau que le reste du collecteur 6. Ce sont avantageusement des tôles fines, soudées entre elles et/ou aux parois du collecteur. Les différents canaux sont ainsi étanches entre eux.

L''exemple de réalisation représenté sur les figures 2 à 7 va maintenant être décrit. Dans ce cas, le collecteur 6 comprend une cloison longitudinale horizontale 63, dite "médiane", car elle s'étend entre les deux faisceaux de tubes intérieur 5 et extérieur 5'. Cette cloison 63 s'étend sur la totalité de la longueur du collecteur 6 mais sur une partie seulement de sa largeur (ici environ les deux tiers) à partir de la paroi latérale 601.

Dans la suite de la description et des revendications, les termes « horizontale » et « verticale » sont à prendre en considération par rapport à l'orientation du dispositif 4 sur la figure 2.

Par ailleurs, le collecteur 6 comprend également une cloison longitudinale verticale supérieure 64, qui s'étend sur toute la longueur du collecteur 6, sur une partie seulement de sa hauteur, à savoir la partie supérieure depuis la cloison 63 vers l'extérieur (vers la paroi supérieure 603).

Le collecteur 6 comprend également deux cloisons longitudinales inférieures verticales 65, 66. La cloison 65 s'étend sur une partie seulement de la longueur du collecteur 6 depuis l'arrière AR jusqu'à la moitié de celui-ci ; elle est disposée sensiblement au tiers de la largeur du collecteur. La cloison longitudinale 66 s'étend sur toute la longueur du collecteur, sensiblement au deuxième tiers de sa largeur. Les cloisons 65, 66 s'étendent entre le fond 600 et la cloison 63, perpendiculairement à celle-ci.

Enfin, le collecteur 6 comprend une cloison transversale 67 verticale qui s'étend sur la totalité de la hauteur du collecteur 6, sensiblement au milieu de la longueur de celui-ci, depuis le fond 600 jusqu'à la paroi supérieure 604 et sur une partie de la largeur du collecteur (de la paroi latérale 602 jusqu'aux cloisons 64 et 66).

Le collecteur 6 comprend également une deuxième cloison transversale 68 verticale inférieure qui s'étend au milieu de la longueur du collecteur, entre le fond 600 et la cloison médiane 63. Cette cloison 68 rejoint la cloison 65.

Les cloisons 65, 63 et 68 forment avec le fond 600 et la paroi latérale 601, un premier canal référencé 71. Ce canal 71 permet de mettre en communication de fluide le raccord d'entrée 61 avec les premières extrémités 51 du deuxième groupe 50b de tubes 50 du premier faisceau 5.

Les cloisons 64, 67 et 66 et une partie de la cloison 63 délimitent avec le fond 600, la paroi supérieure 604 et la paroi latérale 602, sur l'arrière du collecteur 6, un deuxième canal 72. Ce deuxième canal 72 met en communication les deuxièmes extrémités 52 du deuxième groupe 50b de tubes 50 du premier faisceau 5 avec les deuxièmes extrémités 52' du deuxième groupe 50'b de tubes 50' du deuxième faisceau 5'.

Les cloisons 63 et 64 délimitent avec la paroi supérieure 604 et la paroi latérale 601, un troisième canal 73 qui s'étend sur toute la longueur du collecteur 6. Ce troisième canal 73 permet de raccorder les premières extrémités 51' du deuxième groupe 50'b de tubes 50' du deuxième faisceau 5' avec les premières extrémités 51' du premier groupe 50'a de tubes 50' de ce même faisceau.

Les cloisons 64, 66, 67 et une partie de la cloison 63 délimitent avec la paroi supérieure 604 le fond 600 et la paroi latérale 602, vers l'avant AV du collecteur 6, un quatrième canal 74. Ce quatrième canal 74 met en communication les deuxièmes extrémités 52' du premier groupe 50'a de tubes 50' du deuxième faisceau (extérieur) 5' avec les deuxièmes extrémités 52 du premier groupe 50a de tubes 50 du premier faisceau intérieur 5.

Enfin, les cloisons 63, 66, 65 et 68 délimitent avec le fond 600 et la partie avant de la paroi latérale 601, un cinquième canal 75 qui s'étend d'un bout à l'autre du collecteur 6, en présentant une plus grande largeur vers l'avant et en se rétrécissant vers l'arrière AR. Ce cinquième canal 75 permet de mettre en communication les premières extrémités 51 du premier groupe 50a de tubes 50 du premier faisceau intérieur 5 avec le raccord de sortie 62.

Le trajet des gaz va maintenant être décrit en liaison avec la figure 1.

Dans l'exemple de réalisation représenté sur la figure 1, un disque d'isolation thermique 30 est monté à l'intérieur du dispositif d'échanges thermiques 4, perpendiculairement à son axe X1-X'1, de façon à obturer le centre du premier faisceau 5.

Il s'étend en regard du brûleur 3. Il comprend à sa périphérie un anneau déflecteur radial 31 qui est inséré de façon étanche aux gaz dans l'un des interstices 53 du premier faisceau 5 de tubes et dans l'un des interstices 53' du deuxième faisceau 5', tout en laissant un espace annulaire libre 28 entre l'extérieur du deuxième faisceau 5' et l'enveloppe 2, obligeant les fumées à passer par l'espace 28.

Ce disque d'isolation thermique 30 et le déflecteur 31 permettent ainsi de séparer l'enveloppe 2 de l'échangeur 1 en une chambre de combustion 11, à l'intérieur de laquelle se trouvent les moyens d'amenée ou de production de gaz chauds 3 et une chambre de condensation 12 s'étendant entre ce disque d'isolation thermique 30 et la manchette d'évacuation des gaz 25, étant précisé que selon les régime de fonctionnement, de la condensation peut se produire également dans la chambre de combustion.

Les gaz chauds qui s'échappent du brûleur 3 traversent radialement de l'intérieur vers l'extérieur tout d'abord les interstices 53 entre les tubes 50 du premier faisceau 5 (flèches i1), puis les interstices 53' entre les tubes 50' du deuxième faisceau 5'(flèches i2). Ils sont guidés ainsi en raison de la présence du disque d'isolation thermique 30 et du déflecteur 31.

Le flux de gaz très chauds vient ainsi au contact d'une surface relativement étendue de la paroi des tubes et en « léchant » celle-ci assure ainsi un échange de chaleur très efficace avec le fluide à réchauffer qui circule à l'intérieur de ces tubes. Plus les gaz chauds s'éloignent radialement vers l'extérieur et plus ils se refroidissent mais contribuent néanmoins à un échange thermique avec chaque faisceau de tubes qu'ils traversent.

Lorsque les gaz chauds parviennent contre la paroi de l'enveloppe 2 dans l'espace 28, ils sont alors guidés vers l'arrière (flèches i3), parviennent dans la chambre de condensation 12, puis traversent alors radialement, cette fois de l'extérieur vers l'intérieur, les interstices 53' entre les tubes 50' du deuxième faisceau 5'(flèches i4), puis les interstices 53 entre les tubes 50 du premier faisceau 5 (flèches i5), avant de s'échapper au travers de la manchette d'évacuation des gaz 25 (flèches i6).

La circulation du fluide à réchauffer tel que de l'eau va maintenant être décrite en liaison avec les figures 2 à 7. L'eau est mise en circulation à l'aide de moyens, tel une pompe non représentée.

L'eau froide pénètre dans le raccord d'entrée 61, traverse le premier canal 71 (flèches j1), circule dans le deuxième groupe 50b de tubes du premier échangeur 5 et en ressort à son autre extrémité dans le canal 72 (flèches j2). De là, l'eau repart dans le deuxième groupe 50'b de tubes du deuxième faisceau 5' (flèches j3) et ressort aux premières extrémités 51'de ceux-ci dans le troisième canal 73. L'eau est ainsi préchauffée en croisant les gaz refroidis qui circulent dans les interstices 53, 53'.

L'eau repart au travers des tubes du premier groupe 50'a situé vers l'avant du faisceau extérieur 5' (flèches j4) s'écoule au travers de ces tubes et en ressort dans le quatrième canal 74. Dans celui-ci, l'eau rejoint le premier groupe 50a des tubes 50 du faisceau intérieur 5 (flèches j5), puis en ressort pour déboucher à l'intérieur du canal 75 dans la partie avant de celui-ci. L'eau se dirige enfin via la partie arrière de ce canal jusqu'au raccord de sortie 62 (flèches j6).

On comprend ainsi que le fluide à réchauffer peut circuler entre le raccord d'entrée 61 et le raccord de sortie 62, en ayant parcouru l'ensemble des tubes des différents faisceaux constituant le dispositif 4.

Les gaz chauds circulent à contre-courant de la circulation du fluide à réchauffer, ce qui permet un fonctionnement à condensation.

En d'autres termes, le deuxième groupe 50b de tubes 50 du premier faisceau (intérieur) 5 et le deuxième groupe 50'b de tubes 50' du deuxième faisceau (extérieur) 5' sont situés en regard de la chambre de condensation 12, tandis que le premier groupe 50a de tubes 50 du premier faisceau 5 et le deuxième groupe 50'a de tubes 50' du deuxième faisceau 5' sont situés en regard de la chambre de combustion 11.

Ainsi, l'ensemble des tubes du faisceau extérieur 5' situés en regard de la chambre de combustion 11 est alimenté en fluide caloporteur avant que l'ensemble des tubes du faisceau intérieur 5 ne le soit.

On comprend aisément qu'en utilisant un nombre de cloisons variées, en disposant celles-ci sur tout ou partie de la longueur, de la hauteur et de la largeur du collecteur 6, il est ainsi possible de créer différents groupes de tubes et de faire cheminer le fluide à réchauffer selon le parcours souhaité à l'intérieur des faisceaux de tubes, ce parcours étant ajusté et adapté en fonction de la puissance et du rendement que l'on souhaite obtenir avec le dispositif d'échanges thermiques 4, tout en ayant des pertes de charge minimales et en évitant tout risque de surchauffe.

On notera que lorsqu'il y a une chambre de combustion 11 et une chambre de condensation 12, ce disque d'isolation 30 peut se trouver en regard de la zone située entre deux groupes adjacents de tubes ou au contraire se trouver en regard d'un groupe de tubes donné, entre deux tubes adjacents de ce groupe, dès lors dans ce deuxième cas que la circulation du fluide se fait d'abord dans les tubes du faisceau extérieur avant ceux du faisceau intérieur.

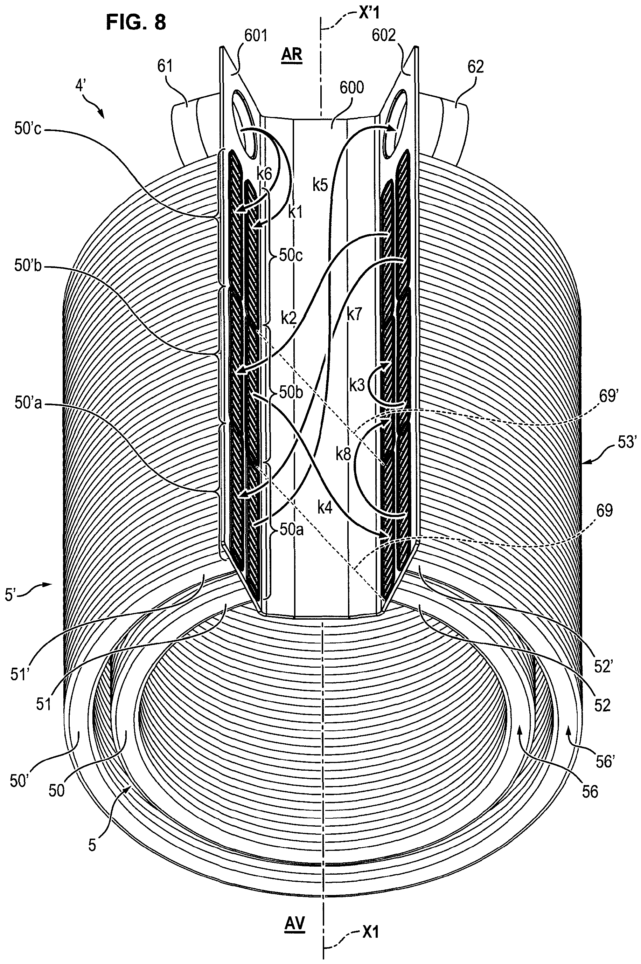

Un deuxième mode de réalisation de l'invention va maintenant être décrit en liaison avec la figure 8.

Sur celle-ci, on peut voir un dispositif d'échanges thermiques 4' qui diffère du dispositif 4 décrit précédemment en liaison avec les figures 2 à 7, par le fait qu'il comprend trois groupes de tubes dans chaque faisceau au lieu de deux.

Les mêmes éléments que ceux précédemment décrits portent les mêmes références numériques. Les trois groupes de tubes sont référencés 50a, 50b et 50c pour le premier faisceau intérieur 5 et, respectivement, 50'a, 50'b et 50'c pour le deuxième faisceau extérieur 5'.

Sur cette figure, seules deux cloisons en diagonale 69, 69' ont été schématisées par des pointillés et les autres cloisons présentes à l'intérieur du collecteur 6 n'ont pas été représentées à des fins de simplification. Toutefois, le trajet du fluide à réchauffer à l'intérieur de ce collecteur 6 va maintenant être décrit.

Le fluide à réchauffer pénètre dans le raccord d'entrée 61 d'où il sort pour se partager en deux flux (flèches k1 et k6) qui alimentent respectivement les premières extrémités 51 du troisième groupe de tubes 50c du faisceau intérieur 5 et les premières extrémités 51' du troisième groupe de tubes 50'c du deuxième faisceau extérieur 5'.

Les flux matérialisés par la flèche k1 et k6 ressortent des tubes 50 respectivement au niveau des deuxièmes extrémités 52 du troisième groupe 50c de tubes et au niveau des deuxièmes extrémités 52' du troisième groupe 50'c de tubes, ils sont mélangés et ils sont dirigés en diagonale respectivement vers les premières extrémités 51' du second 50'b et du premier groupe de tubes 50'a du deuxième faisceau extérieur 5' (flèches k2et k7) et en ressortent par leurs deuxièmes extrémités 52'.

Les flux qui en sortent pénètrent alors tous les deux dans les deuxièmes extrémités 52 du deuxième groupe 50b de tubes du faisceau intérieur 5 (flèches k3 et k8). Le flux de liquide circule à l'intérieur des tubes 50 et ressort de ceux-ci par leurs premières extrémités 51.

Le flux sortant de ces premières extrémités 51 est ensuite dirigé en diagonale vers les deuxièmes extrémités 52 du premier groupe 50a de tubes du premier faisceau 5 (flèche k4). Après avoir circulé à l'intérieur des tubes 50, le fluide ressort par leurs premières extrémités 51 pour être ensuite dirigé vers le raccord de sortie 62 (flèche k5).

Selon une variante de réalisation représentée sur la figure 14, le raccord d'entrée 61 est situé sur le dessus du collecteur et de l'échangeur et vers l'arrière et le raccord de sortie 62 sur le dessus et vers l'avant. Dans ce cas, les flux k1 et k6 proviennent du haut du collecteur et le flux k5 est évacué vers le haut et vers l'avant du collecteur.

On voit donc ainsi que, dans ce cas, certaines cloisons peuvent être en diagonale, lorsqu'il s'agit par exemple de relier les premières extrémités d'un groupe de tubes donné, par exemple le premier groupe de tubes aux deuxièmes extrémités du, deuxième ou du troisième groupe de tubes. Les cloisons en diagonale 69, 69'sont ainsi ni parallèles à l'axe longitudinal X1-X'1, ni perpendiculaires à celui-ci. Les cloisons en diagonale présentent l'avantage de réduire significativement les pertes de charge dans le collecteur.

Par ailleurs, on observe qu'il est également possible de raccorder des premières extrémités d'un groupe de tubes de l'un des faisceaux à des deuxièmes extrémités d'un groupe de tubes d'un autre faisceau. Pour ce faire, il est nécessaire d'utiliser des cloisons inclinées, c'est-à-dire qui ne sont pas parallèles au fond 600.

Il est également possible de raccorder un groupe de tubes avec plusieurs groupes de tubes.

Tout comme décrit pour le précédent mode de réalisation, les gaz chauds circulent à contre-courant de la circulation du fluide à réchauffer. En d'autres termes, les troisièmes groupes de tubes 50c du faisceau intérieur 5 et 50'c du faisceau extérieur 5' (voir figure 8) sont disposés en regard de la chambre de condensation 12 tandis que les deuxièmes groupes de tubes 50b, 50'b et premiers groupes de tubes 50a, 50'a sont disposés en regard de la chambre de combustion 11.

Ainsi, l'ensemble des tubes (groupes 50'a et 50'b) du faisceau extérieur 5' situés en regard de la chambre de combustion 11 est alimenté en fluide caloporteur avant que l'ensemble des tubes (groupe 50b puis groupe 50a) du faisceau intérieur 5 ne le soit.

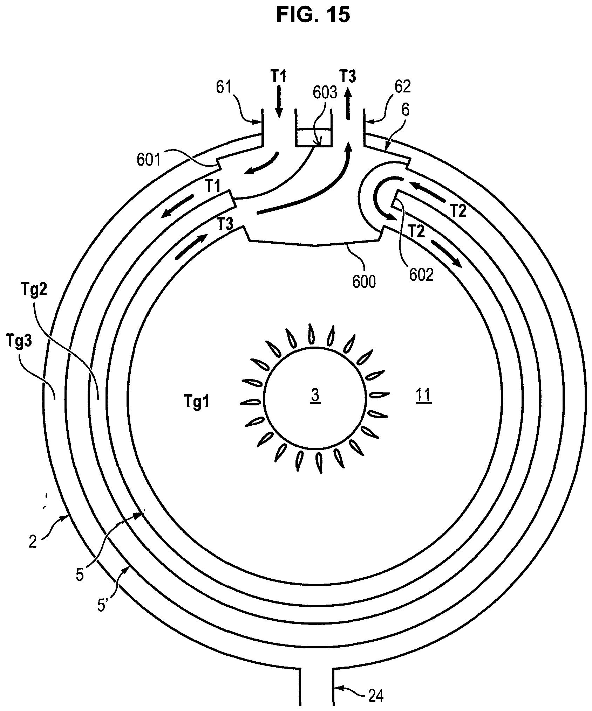

L'effet technique de l'agencement des canaux sur la circulation du fluide caloporteur dans les dispositifs 4, 4' dans la chambre de combustion 11 va maintenant être expliqué en liaison avec la figure 15.

Le fluide caloporteur entre à une température T1 dans le faisceau extérieur 5', en ressort à une température T2 supérieure à T1, pénètre dans le faisceau intérieur 5 à T2 et en ressort à une température T3 supérieure à T2. Dans le même temps, les gaz chauds sortant du brûleur 3 à Tg1 se refroidissent à des températures de Tg2 inférieure à Tg1 puis Tg3 inférieure à Tg2 après passage entre les interstices des tubes des deux faisceaux 5, 5'.

Ainsi par exemple pour produire de l'eau à T3 de l'ordre de 50°C, à partir d'une eau à une température T1 égale à 30°C, la température T2 sera de l'ordre de 35°C. Dans le même temps, les gaz chauds produits par le brûleur 3 passeront d'une température Tg1 de 1000°C environ à une température Tg2 de 130°C environ puis à une température Tg3 de 35°C environ. Grâce aux caractéristiques de l'invention, on observe ainsi un net refroidissement des gaz chauds au travers des différents faisceaux de tubes. L'eau froide pénétrant tout d'abord dans le faisceau de tubes extérieur 5', la température Tg3 est nettement abaissée par rapport à ce qui était le cas avec les dispositifs de l'état de la technique.

De même, par exemple, pour produire de l'eau à T3 égale à 95°C à partir d'une eau à une température T1 de 80°C, la température T2 sera voisine de 84°C environ. Dans ce cas, les températures Tg1, Tg2 et Tg3 seront respectivement de 1000°C, 180°C et 85°C environ. Ainsi, un tel dispositif permet de produire de l'eau à 95°C mais sans qu'il y ait une région du dispositif d'échanges thermiques 4 dans laquelle l'eau entre en ébullition.

Un autre mode de réalisation de l'invention va maintenant être décrit dans lequel le dispositif d'échanges thermiques 4" comprend un troisième faisceau 5"de tubes 50" concentrique avec les deux autres et disposé à l'extérieur du deuxième faisceau 5'. Les deuxième et troisième faisceaux 5', 5"sont espacés entre eux d'un intervalle E1, qui peut être identique ou différent de l'intervalle E existant entre les premier et deuxième faisceaux.

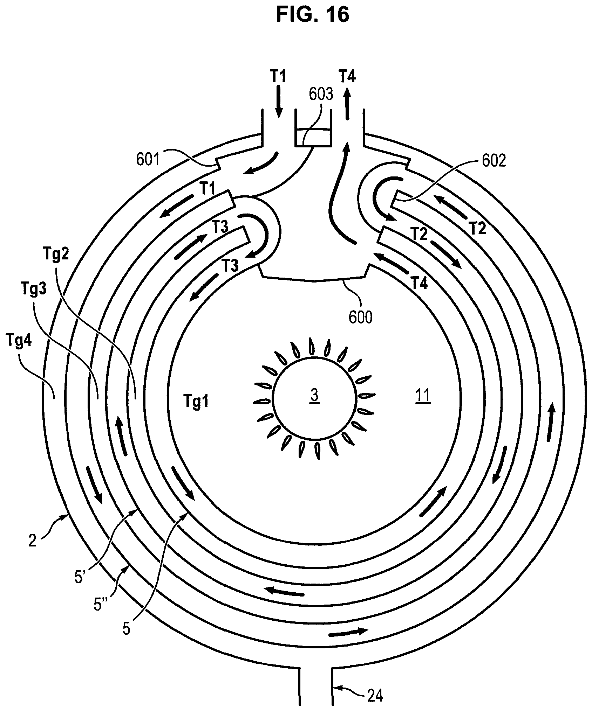

L'effet technique de cet agencement avec trois faisceaux de tubes concentriques est schématisé sur la figure 16. Les gaz chauds sortant du brûleur 3 à une température de Tg1 refroidissent à des températures de Tg2 inférieure à Tg1, puis Tg3 inférieure à Tg2 et enfin Tg4 inférieure à Tg3, après passage entre les interstices des tubes des trois faisceaux 5, 5' et 5".

Le fluide caloporteur circule tout d'abord exclusivement dans les tubes du faisceau 5" le plus à l'extérieur. Il y pénètre à une température T1 et en ressort à une température T2 supérieure à T1. Il pénètre ensuite dans le faisceau intermédiaire 5' à une température T2, en ressort à une température T3 supérieure à T2, et enfin entre dans le faisceau intérieur 5 à une température T3 et en ressort à une température T4 supérieure à T3.

Ainsi, par exemple, pour produire de l'eau sortant à une température T4 de 50°C, à partir d'une eau entrant à une température T1 de 30°C, on constate que les températures T2 et T3 sont respectivement de l'ordre de 34°C et 38°C environ. Dans le même temps, les gaz chauds produits à Tg1 (voisin de 1000°C) refroidissent à des températures Tg2 (voisine de 140°C), Tg3 (voisine de 60°C) et enfin Tg4 (voisine de 32°C). De nouveau, les gaz sortants sont à une température inférieure au point de rosée, de sorte qu'ils condensent et que ceci permet de récupérer un maximum de chaleur pour réchauffer le fluide caloporteur, le tout avec un très bon rendement thermique global de l'échangeur.

De même, par exemple, pour produire une eau à une température T4 de 95°C, à partir d'une eau à une température T1 de 80°C, on constate que les températures T2 et T3 sont respectivement de 81°C et de 88°C environ. Les gaz chauds produits à Tg1 (1000°C) passent respectivement à Tg2 (environ 190°C), Tg3(environ 105°C) et enfin Tg4 (environ 82°C).

De nouveau on n'observe pas de micro-ébullition, notamment dans le faisceau de tubes intérieur 5.

Enfin, sur les figures 15 et 16, on notera que les cloisons délimitant les différents canaux peuvent également être incurvées, c'est-à-dire présenter une section transversale (prise dans un plan perpendiculaire à X1-X'1) de forme cintrée.

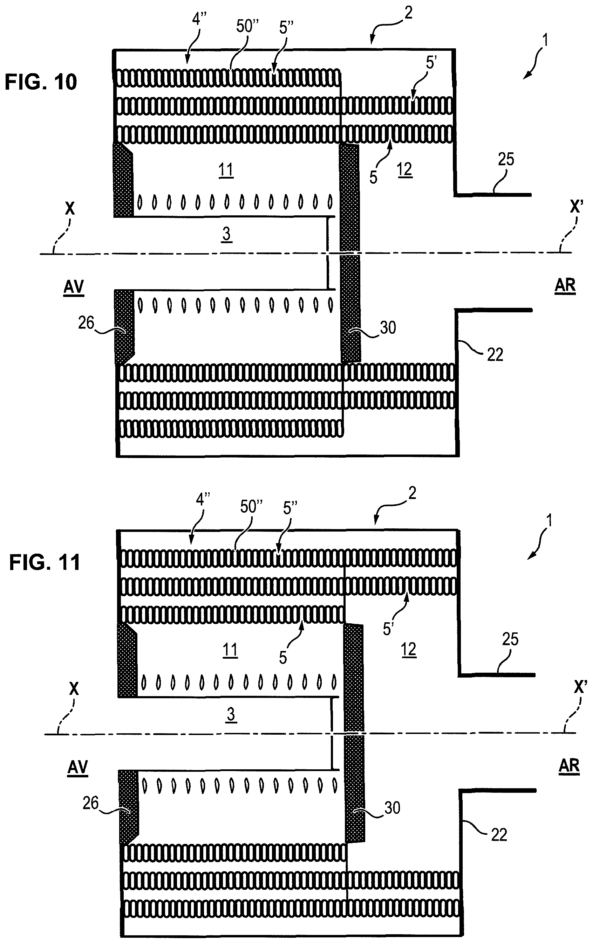

Enfin, les deux modes de réalisation représentés sur les figures 10 et 11 diffèrent du mode de réalisation de la figure 9, en ce que les faisceaux de tubes ne sont pas tous de la même longueur. Ainsi, dans le mode de réalisation de la figure 10, le troisième faisceau 5" de tubes est plus court que les deux autres faisceaux 5 et 5', de sorte qu'il y a trois faisceaux de tubes en regard de la chambre de combustion 11 et seulement deux en regard de la chambre de condensation 12.

Inversement, dans l'exemple représenté sur la figure 11, c'est le premier faisceau 5 qui est plus court que les autres faisceaux 5'' et 5''.

On comprend aisément que d'autres modes de réalisation sont envisageables en faisant varier le nombre de faisceaux qui doit être au moins de deux, et en utilisant des faisceaux de longueurs identiques ou différentes.

De même, en faisant varier la forme, la longueur, la hauteur, la largeur, la disposition et l'inclinaison des différentes cloisons positionnées à l'intérieur du collecteur 6, il est possible de former des groupes de tubes comprenant plus ou moins de tubes, de réaliser des trajets différents entre le raccord d'entrée et le raccord de sortie et ainsi, d'obtenir des dispositifs d'échanges thermique s présentant des différences de puissance, de compacité en longueur ou en diamètre, de rendement ou de pertes de charge (pertes de pression).

D'une manière générale, lorsque l'on souhaite augmenter la puissance de l'échangeur 1, on peut augmenter au choix le nombre de tubes par faisceau, les dimensions de la section des tubes, le diamètre des faisceaux et/ou le nombre de faisceaux.

Pour augmenter le rendement, c'est-à-dire le rapport entre la quantité d'énergie produite par rapport à la quantité d'énergie fournie, on peut pour une puissance donnée, agir sur les paramètres précités et/ou augmenter le nombre de tubes dans la partie condensation.

Par ailleurs, le monocollecteur 6 permet de diminuer les pertes de charge par rapport à une circulation dans un tube hélicoïdal, puisqu'il permet de faire circuler le fluide caloporteur en parallèle dans tous les tubes d'un même groupe. Il permet également de diriger et de partager les flux de liquide caloporteur entre les faisceaux pour diminuer les pertes de charge et éviter les surchauffes.

## Revendications

1. Echangeur de chaleur (1), comprenant :
- une enveloppe (2), étanche aux gaz, délimitant une chambre de combustion (11), et présentant une manchette d'évacuation des gaz (25),
- un dispositif d'échanges thermiques (4, 4', 4") dans lequel un fluide caloporteur à réchauffer, tel que de l'eau, est destiné à circuler, ce dispositif (4, 4', 4") étant monté fixement à l'intérieur de ladite enveloppe (2),
- des moyens d'amenée de gaz chauds ou des moyens de production de gaz chauds (3) dans la chambre de combustion (11) de ladite enveloppe (2), ledit dispositif d'échanges thermiques (4, 4', 4") comprenant :
- un premier faisceau de tubes (5), dit "intérieur" et au moins un deuxième faisceau (5', 5'') de tubes, dit extérieur, disposé autour du premier de façon concentrique, ces différents tubes étant réalisés en matériau thermiquement bon conducteur et ledit fluide caloporteur étant destiné à y circuler, chaque faisceau de tubes (5, 5', 5") comprenant une série de tubes (50, 50', 50") dont chacun est en forme d'arc de cercle et présente une première extrémité (51, 51') et une deuxième extrémité (52, 52'), les tubes (50, 50', 50") de chaque faisceau (5, 5', 5") étant disposés dans des plans parallèles avec un interstice (53, 53', 53"), de préférence de largueur constante, entre deux tubes adjacents (50, 50', 50"),
- un unique collecteur (6), en matériau thermiquement bon conducteur, délimité par des parois, la première extrémité (51, 51') et la deuxième extrémité (52, 52') de chaque tube (50, 50', 50") des différents faisceaux (5, 5', 5") étant raccordées à ce collecteur, de sorte qu'elles débouchent à l'intérieur dudit collecteur,
- ce collecteur (6) étant muni d'un raccord d'entrée (61) permettant de l'alimenter en fluide caloporteur à chauffer et d'un raccord de sortie (62) permettant l'évacuation dudit fluide une fois chauffé,
- lesdits moyens d'amenée ou lesdits moyens de production de gaz chauds (3) étant disposés au voisinage dudit dispositif d'échanges thermiques (4, 4', 4"), de façon que ces gaz chauds traversent radialement les différents faisceaux (5, 5', 5") de tubes (50, 50', 50") concentriques, de l'intérieur vers l'extérieur, en passant dans les interstices (53, 53', 53") ménagés entre lesdits tubes (50, 50', 50"), avant d'être évacués à l'extérieur de l'échangeur (1), via ladite manchette d'évacuation (25),
- **caractérisé en ce que** ledit échangeur de chaleur (1) est un échangeur de chaleur à condensation,
- **en ce que** dans chaque faisceau de tubes (5,5',5") on désigne par "groupe de tubes" un groupe d'au moins deux tubes adjacents à l'intérieur desquels le fluide caloporteur circule en parallèle et dans le même sens, et
- **en ce que** l'enveloppe (2) comprend également une chambre de condensation (12), **en ce que** certains groupes de tubes du faisceau de tubes intérieur (5) et de l'au moins un deuxième faisceau de tubes (5', 5'') extérieur sont disposés dans ladite chambre de condensation (12), les autres groupes de tubes du faisceau de tubes intérieur (5) et de l'au moins un deuxième faisceau de tubes (5', 5'') extérieur étant disposés dans la chambre de combustion (11),
- ledit collecteur (6) comprend plusieurs cloisons intérieures (63, 64, 65, 66, 67, 68, 69, 69') soudées entre elles et/ou aux parois du collecteur, **en ce que** ces cloisons (63, 64, 65, 66, 67, 68, 69, 69') délimitent différents canaux, qui sont agencés de façon à faire circuler le fluide à réchauffer depuis ledit raccord d'entrée (61), dans l'ensemble des tubes jusqu'au raccord de sortie (62) où le fluide une fois chauffé est évacué, cette circulation s'effectuant à travers différents groupes d'au moins deux tubes de chaque faisceau successif,
- **en ce que** ces canaux sont également agencés de façon à ce que, à l'intérieur des tubes des différents faisceaux situés dans la chambre de combustion (11) en regard desdits moyens d'amenée de gaz chauds ou des moyens de production de gaz chauds (3), la circulation du fluide s'effectue au travers des différents groupes d'au moins deux tubes (50, 50', 50") de chaque faisceau successif et ce, successivement, faisceau par faisceau, du faisceau le plus à l'extérieur (5", 5') jusqu'au faisceau intérieur (5),
- **en ce que** le collecteur (6) comprend au moins un canal (71,72,73) qui permet de mettre en communication ledit raccord d'entrée (61) avec les premières (51') ou les deuxièmes extrémités (52') d'au moins un groupe d'au moins deux tubes (50', 50") exclusivement de la partie du faisceau le plus à l'extérieur (5', 5") se trouvant dans la chambre de combustion (11), via les tubes du faisceau de tubes intérieur (5) et les tubes de l'au moins un deuxième faisceau de tubes (5', 5'') extérieur se trouvant dans ladite chambre de condensation (12), et
- et **en ce que** ledit collecteur (6) comprend au moins un canal (75) qui permet de mettre en communication les premières (51) ou deuxièmes extrémités (52) d'au moins un groupe d'au moins deux tubes (50) exclusivement de la partie du faisceau intérieur (5) se trouvant dans la chambre de combustion (11), avec ledit raccord de sortie (62).

2. Echangeur de chaleur (1) selon la revendication 1, **caractérisé en ce que** le collecteur (6) comprend un fond (600), une paroi extérieure (603), une paroi arrière (604), une paroi avant (605) et deux parois latérales (601, 602) au travers desquelles les premières et les deuxièmes extrémités (51, 51', 52, 52') des tubes des différents faisceaux (5, 5', 5") débouchent à l'intérieur du collecteur (6) et ce que ces parois latérales (601, 602) s'étendent dans des plans radiaux d'un cylindre dont l'axe longitudinal (X1-X'1) passe par le centre des cercles des différents tubes (50, 50', 50") en arc de cercle.

3. Echangeur de chaleur (1) selon la revendication 1 ou 2, **caractérisé en ce que** les tubes (50, 50', 50") desdits faisceaux (5, 5', 5") présentent une section droite ovale aplatie de sorte qu'ils comprennent deux faces planes latérales (55, 55', 56, 56') parallèles entre elles et perpendiculaires à l'axe longitudinal (X1-X'1) joignant les centres des cercles des tubes (50, 50', 50") en arc de cercle.

4. Echangeur de chaleur (1) selon l'une des revendications précédentes, **caractérisé en ce que** les cloisons (63, 64, 65, 66, 67, 68, 69, 69') qui constituent les différents canaux (71, 72, 73, 74, 75) s'étendent dans le collecteur (6) longitudinalement, transversalement et/ou en diagonale.

5. Echangeur de chaleur (1) selon l'une des revendications précédentes, **caractérisé en ce que** les cloisons (63, 64, 65, 66, 67, 68, 69, 69') qui constituent les différents canaux (71, 72, 73, 74, 75) s'étendent sur une partie ou sur la totalité de la hauteur, de la largeur ou de la longueur du collecteur (6).

6. Echangeur de chaleur (1) selon l'une des revendications précédentes, **caractérisé en ce que** les cloisons (63, 64, 65, 66, 67, 68, 69, 69') qui constituent les différents canaux (71, 72, 73, 74, 75) sont incurvées.

7. Echangeur de chaleur (1) selon l'une des revendications précédentes, **caractérisé en ce que** les interstices (53, 53', 53") entre deux tubes adjacents (50, 50', 50") des différents faisceaux (5, 5', 5") sont calibrés au moyen d'entretoises.

8. Echangeur de chaleur (1) selon la revendication 7, **caractérisé en ce que** lesdites entretoises sont des bossages ou corrugations (54, 54'), formées dans la paroi d'un tube (50, 50', 50"), en regard de la paroi d'un tube adjacent (50, 50', 50") du même faisceau.

9. Echangeur de chaleur (1) selon l'une des revendications précédentes, **caractérisé en ce qu'**il comprend des moyens pour faire circuler ledit fluide caloporteur dans les tubes.

10. Echangeur de chaleur (1) selon l'une des revendications précédentes, **caractérisé en ce que** les moyens de production de gaz chauds sont un brûleur à gaz ou à fioul.

## Patentansprüche

1. Wärmetauscher (1) mit:
- einem gasdichten Gehäuse (2), das eine Brennkammer (11) begrenzt und eine Gasableitungsmanschette (25) aufweist,
- einer Wärmetauschvorrichtung (4, 4', 4''), in der ein zu erhitzendes Wärmeträgermedium wie Wasser zirkuliert, wobei diese Vorrichtung (4, 4 4'') feststehend innerhalb des Gehäuses (2) angebracht ist,
- Heißgas-Zuführungseinrichtungen oder Heißgas-Erzeugungseinrichtungen (3) in der Brennkammer (11) des Gehäuses (2),
wobei diese Wärmetauschvorrichtung (4, 4', 4'') umfasst:
- ein erstes sogenanntes "inneres" Rohrbündel (5) und mindestens ein zweites sogenanntes "äußeres" Rohrbündel (5', 5''), das konzentrisch um das erste Bündel angeordnet ist, wobei diese unterschiedlichen Rohre aus einem thermisch gut leitenden Material hergestellt sind und dieses Wärmeträgermedium hier zirkuliert, wobei jedes Rohrbündel (5, 5', 5'') eine Reihe von Rohren (50, 50', 50'') umfasst, die jeweils eine Kreisbogenform haben sowie einen ersten Endabschnitt (51, 51') und einen zweiten Endabschnitt (52, 52') aufweisen, wobei die Rohre (50, 50', 50'') jedes Bündels (5, 5', 5'') in einer parallelen Ebene mit einem Zwischenraum (53, 53', 53'') mit vorzugsweise konstanter Breite zwischen zwei aneinandergrenzenden Rohren (50, 50', 50'') angeordnet sind,
- ein einmaliges Sammelrohr (6) aus einem thermisch gut leitenden Material, das von Wänden begrenzt ist, wobei der erste Endabschnitt (51, 51') und der zweite Endabschnitt (52, 52') jedes Rohres (50, 50', 50'') der verschiedenen Bündel (5, 5', 5'') mit diesem Sammelrohr verbunden sind, sodass sie im Inneren dieses Sammelrohrs einmünden,
- wobei dieses Sammelrohr (6) mit einem Eingangsanschluss (61), über den das zu erhitzende Wärmeträgermedium zugeleitet werden kann, und einem Ausgangsanschluss (62), über den das erhitzte Medium abgeleitet werden kann, versehen ist,
- wobei die Heißgas-Zuführungsvorrichtungen oder Heißgas-Erzeugungsvorrichtungen (3) in der Umgebung der Wärmetauschvorrichtung (4, 4', 4'') angeordnet sind, sodass diese heißen Gase die verschiedenen Bündel (5, 5', 5'') der konzentrischen Rohre (50, 50', 50'') von innen nach außen durch die vorgesehenen Zwischenräume (53, 53', 53'') zwischen diesen Rohren (50, 50', 50'') in radialer Richtung durchströmen, bevor sie über die Ableitungsmanschette (25) aus dem Wärmetauscher (1) abgeleitet werden,
- **dadurch gekennzeichnet, dass** dieser Wärmetauscher (1) ein Kondensationswärmetauscher ist,
- dass in jedem Rohrbündels (5, 5', 5'') eine "Rohrgruppe" als eine Gruppe von mindestens zwei aneinandergrenzenden Rohren bezeichnet wird, in denen das Wärmeträgermedium parallel und in derselben Richtung zirkuliert, und
- dass das Gehäuse (2) ebenfalls eine Kondensationskammer (12) umfasst, dass bestimmte Rohrgruppen des inneren Rohrbündels (5) und des mindestens einen zweiten äußeren Rohrbündels (5', 5'') in der Kondensationskammer (12) angeordnet sind, wobei die anderen Rohrgruppen des inneren Rohrbündels (5) und des mindestens einen zweiten äußeren Rohrbündels (5', 5'') in der Brennkammer (11) angeordnet sind,
- dass das Sammelrohr (6) mehrere innere Zwischenwände (63, 64, 65, 66, 67, 68, 69, 69') aufweist, die miteinander und/oder mit den Wänden des Sammelrohrs verschweißt sind, dass diese Zwischenwände (63, 64, 65, 66, 67, 68, 69, 69') verschiedene Kanäle begrenzen, die so angeordnet sind, dass das zu erhitzende Medium vom Eingangsanschluss (61) durch alle Rohre bis zum Ausgangsanschluss (62) strömt, wo das erhitzte Medium abgeleitet wird, wobei diese Zirkulation durch verschiedene Gruppen von mindestens zwei Rohren jedes aufeinanderfolgenden Bündels erfolgt,
- dass diese Kanäle ebenfalls so angeordnet sind, dass die Zirkulation des Mediums im Inneren der Rohre der verschiedenen Bündel in der Brennkammer (11) gegenüber von den Heißgas-Zuführungseinrichtungen oder Heißgas-Erzeugungseinrichtungen (3) über verschiedene Gruppen von mindestens zwei Rohren (50, 50', 50'') jedes aufeinanderfolgenden Bündels erfolgt, und zwar aufeinanderfolgend und bündelweise vom äußersten (5'', 5') zum innersten Bündel (5),
- dass das Sammelrohr (6) mindestens einen Kanal (71, 72, 73) aufweist, der es ermöglicht, eine Verbindung zwischen dem Eingangsanschluss (61) und den ersten (51') oder zweiten Endabschnitten (52') mindestens einer Gruppe von mindestens zwei Rohren (50', 50'') ausschließlich des äußersten Bündelabschnitts (5', 5'') in der Brennkammer (11) über die Rohre des inneren Rohrbündels (5) und die Rohre des mindestens einen zweiten äußeren Rohrbündels (5', 5'') in der Kondensationskammer (12) herzustellen, und
- dass das Sammelrohr (6) mindestens einen Kanal (75) aufweist, der es ermöglicht, eine Verbindung zwischen den ersten (51) oder zweiten Endabschnitten (52) mindestens einer Gruppe von mindestens zwei Rohren (50) ausschließlich des inneren Bündelabschnitts (5) in der Brennkammer (11) und dem Ausgangsanschluss (62) herzustellen.

2. Wärmetauscher (1) nach Anspruch 1, **dadurch gekennzeichnet, dass** das Sammelrohr (6) einen Boden (600), eine Außenwand (603), eine Rückwand (604), eine Vorderwand (605) und zwei Seitenwände (601, 602) aufweist, durch welche die ersten und zweiten Endabschnitte (51, 51', 52, 52') der Rohre der verschiedenen Bündel (5, 5', 5'') im Inneren des Sammelrohrs (6) einmünden, und dass diese Seitenwände (601, 602) in radialer Ebene über einen Zylinder erweitert sind, dessen Längsachse (X1-X'1) durch den Mittelpunkt der Kreise der verschiedenen Rohre (50, 50', 50'') in Kreisbogenform verläuft.

3. Wärmetauscher (1) nach Anspruch 1 oder 2, **dadurch gekennzeichnet, dass** die Rohre (50, 50', 50'') der Bündel (5, 5', 5'') einen geraden ovalen abgeflachten Querschnitt aufweisen, sodass sie zwei ebene Seitenflächen (55, 55', 56, 56') umfassen, die zueinander parallel sind und senkrecht zur Längsachse (X1-X'1) zur Verbindung der Mittelpunkte der Kreise der Rohre (50, 50', 50'') in Kreisbogenform stehen.

4. Wärmetauscher (1) nach einem der vorstehenden Ansprüche, **dadurch gekennzeichnet, dass** die Zwischenwände (63, 64, 65, 66, 67, 68, 69, 69'), die den verschiedenen Kanälen (71, 72, 73, 74, 75) entsprechen, in Längsrichtung, in Querrichtung und/oder in Diagonalrichtung im Sammelrohr (6) erweitert sind.

5. Wärmetauscher (1) nach einem der vorstehenden Ansprüche, **dadurch gekennzeichnet, dass** die Zwischenwände (63, 64, 65, 66, 67, 68, 69, 69'), die den verschiedenen Kanälen (71, 72, 73, 74, 75) entsprechen, teilweise oder vollständig über die Höhe, Breite oder Länge des Sammelrohrs (6) erweitert sind.

6. Wärmetauscher (1) nach einem der vorstehenden Ansprüche, **dadurch gekennzeichnet, dass** die Zwischenwände (63, 64, 65, 66, 67, 68, 69, 69'), die den verschiedenen Kanälen (71, 72, 73, 74, 75) entsprechen, gekrümmt sind.

7. Wärmetauscher (1) nach einem der vorstehenden Ansprüche, **dadurch gekennzeichnet, dass** die Zwischenräume (53, 53', 53'') zwischen zwei aneinandergrenzenden Rohren (50, 50', 50'') der verschiedenen Bündel (5, 5', 5'') mithilfe von Abstandhaltern kalibriert sind.

8. Wärmetauscher (1) nach Anspruch 7, **dadurch gekennzeichnet, dass** es sich bei diesen Abstandhaltern um Erhebungen oder Wellungen (54, 54') in der Wand eines Rohres (50, 50', 50'') gegenüber von der Wand eines angrenzenden Rohres (50, 50', 50'') desselben Bündels handelt.

9. Wärmetauscher (1) nach einem der vorstehenden Ansprüche, **dadurch gekennzeichnet, dass** der Wärmetauscher Einrichtungen zur Zirkulation des Wärmeträgermediums in den Rohren umfasst.

10. Wärmetauscher (1) nach einem der vorstehenden Ansprüche, **dadurch gekennzeichnet, dass** es sich bei den Heißgas-Erzeugungseinrichtungen um einen Gas- oder Ölbrenner handelt.

## Claims

1. A heat exchanger (1), comprising:
- a gas-tight shell (2) delimiting a combustion chamber (11), and having a gas discharge sleeve (25),
- a heat exchange device (4, 4', 4") in which a heat-transfer fluid to be heated, such as water, is intended to circulate, this device (4, 4', 4") being fixedly mounted inside said shell (2),
- means (3) for conveying or producing hot gases into the combustion chamber (11) of said shell (2), said heat exchange device (4, 4', 4") comprising:
- a first bundle of tubes (5), called "internal" bundle of tubes and at least one second bundle of tubes (5', 5"), called "external" bundle of tubes disposed around the first bundle of tubes in a concentric manner, these different tubes being made of thermally good conductive material and said heat-transfer fluid being intended to circulate therein, each bundle of tubes (5, 5', 5") comprising a series of tubes (50, 50', 50"), each of which is in the form of an arc of a circle and has a first end (51, 51') and a second end (52, 52'), the tubes (50, 50', 50") of each bundle (5, 5', 5") being disposed in parallel planes with a gap (53, 53', 53"), preferably of constant width, between two adjacent tubes (50, 50', 50"),
- a single manifold (6), made of a thermally good conductive material, delimited by walls, the first end (51, 51') and the second end (52, 52') of each tube (50, 50', 50") of the different bundles (5, 5', 5") being connected to this manifold, so that they open out inside said manifold,
- this manifold (6) being provided with an inlet fitting (61) allowing it to be supplied with heat-transfer fluid to be heated and with an outlet fitting (62) allowing said heat-transfer fluid to be discharged once heated,
- said means (3) for conveying or producing hot gases being disposed in the vicinity of said heat exchange device (4, 4', 4"), such that these hot gases pass radially through the different concentric bundles (5, 5', 5") of tubes (50, 50', 50"), from the inside to the outside, passing through the gaps (53, 53', 53") arranged between said tubes (50, 50', 50"), before being discharged outside the exchanger (1), via said discharge sleeve (25),
- **characterized in that** said heat exchanger (1) is a condensation heat exchanger,
- **in that** in each bundle of tubes (5, 5',5''), "group of tubes" denotes a group of at least two adjacent tubes inside which the heat-transfer fluid circulates in parallel and in the same direction, and
- **in that** the shell (2) also comprises a condensation chamber (12), **in that** some groups of tubes of the internal bundle of tubes (5) and of the at least one second external bundle of tubes (5', 5") are disposed in said condensation chamber (12), the other groups of tubes of the internal bundle of tubes (5) and of the at least one second external bundle of tubes (5', 5") being disposed in the combustion chamber (11),
- said manifold (6) comprises several interior partitions (63, 64, 65, 66, 67, 68, 69, 69') welded together and/or to the walls of the manifold, **in that** these partitions (63, 64, 65, 66, 67, 68, 69, 69') delimit different channels, which are arranged so as to circulate the heat-transfer fluid to be heated from said inlet fitting (61), throughout the set of tubes up to the outlet fitting (62) where the heat-transfer fluid once heated is discharged, this circulation taking place through different groups of at least two tubes of each successive bundle,
- **in that** these channels are also arranged such that, inside the tubes of the different bundles located in the combustion chamber (11) facing said hot gas conveying or production means (3), the circulation of the heat-transfer fluid takes place through the different groups of at least two tubes (50, 50', 50") of each successive bundle and this, successively, bundle by bundle, from the outermost bundle (5", 5') to the innermost bundle (5),
- **in that** the manifold (6) comprises at least one channel (71, 72, 73) which allows communicating said inlet fitting (61) with the first (51') or the second (52') ends of at least one group of at least two tubes (50', 50") exclusively from the outermost part of the bundle (5', 5") located in the combustion chamber (11), via the tubes of the internal bundle of tubes (5) and the tubes of the at least one second external bundle of tubes (5', 5") located in said condensation chamber (12), and
- and **in that** said manifold (6) comprises at least one channel (75) which allows communicating the first (51) or second (52) ends of at least one group of at least two tubes (50) exclusively of the part of the internal bundle (5) located in the combustion chamber (11), with said outlet fitting (62).

2. The heat exchanger (1) according to claim 1, **characterized in that** the manifold (6) comprises a bottom (600), an external wall (603), a rear wall (604), a front wall (605) and two side walls (601, 602) through which the first and second ends (51, 51', 52, 52') of the tubes of the different bundles (5, 5', 5") open out inside the manifold (6) and **in that** these side walls (601, 602) extend in radial planes of a cylinder whose longitudinal axis (X1-X'1) passes through the center of the circles of the different arc-shaped tubes (50, 50', 50").

3. The heat exchanger (1) according to claim 1 or 2, **characterized in that** the tubes (50, 50', 50") of said bundles (5, 5', 5") have a flattened oval crosssection so that they comprise two planar side faces (55, 55', 56, 56') parallel to each other and perpendicular to the longitudinal axis (X1-X'1) joining the centers of the circles of the arc-shaped tubes (50, 50', 50").

4. The heat exchanger (1) according to any of the preceding claims, **characterized in that** the partitions (63, 64, 65, 66, 67, 68, 69, 69') which constitute the different channels (71, 72, 73, 74, 75) extend in the manifold (6) longitudinally, transversely and/or diagonally.

5. The heat exchanger (1) according to any of the preceding claims, **characterized in that** the partitions (63, 64, 65, 66, 67, 68, 69, 69') which constitute the different channels (71, 72, 73, 74, 75) extend over part of or over the entire height, width or length of the manifold (6).

6. The heat exchanger (1) according to any of the preceding claims, **characterized in that** the partitions (63, 64, 65, 66, 67, 68, 69, 69') which constitute the different channels (71, 72, 73, 74, 75) are curved.

7. The heat exchanger (1) according to any of the preceding claims, **characterized in that** the gaps (53, 53', 53") between two adjacent tubes (50, 50', 50") of the different bundles (5, 5', 5") are calibrated by means of spacers.

8. The heat exchanger (1) according to claim 7, **characterized in that** said spacers are bosses or corrugations (54, 54'), formed in the wall of a tube (50, 50', 50"), facing the wall of an adjacent tube (50, 50', 50") of the same bundle.

9. The heat exchanger (1) according to any of the preceding claims, **characterized in that** it comprises means for circulating said heat-transfer fluid in the tubes.

10. The heat exchanger (1) according to any of the preceding claims, **characterized in that** the means for producing hot gases are a gas or oil burner.
